# NEUE EUROPÄISCHE PATENTSCHRIFT

(11) **EP 0 999 968 B2**
(45) Veröffentlichungstag und Bekanntmachung des Hinweises auf die Entscheidung über den Einspruch: **24.10.2007**
(45) Hinweis auf die Patenterteilung: 24.10.2001
(21) Anmeldenummer: 98948691.5
(22) Anmeldetag: 30.07.1998
(51) Int. Cl.: B60R 25/00, B60R 25/02

(54) **LENKRADVERRIEGELUNG AN EINEM KRAFTFAHRZEUG**
STEERING WHEEL LOCKING SYSTEM FOR A MOTOR VEHICLE
BLOCAGE DE VOLANT DE DIRECTION SUR UNE AUTOMOBILE

(30) Priorität: 01.08.1997 DE 19733249
(43) Veröffentlichungstag der Anmeldung: 17.05.2000
(73) Patentinhaber: Marquardt GmbH, 78604 Rietheim-Weilheim (DE)
(72) Erfinder: MÜLLER, Karl, D-78628 Rottweil (DE); SACHS, Ekkehard, D-78549 Spaichingen (DE)
(74) Vertreter: Eisele, Otten, Roth & Dobler
(86) Internationale Anmeldenummer: PCT/DE1998/002179
(87) Internationale Veröffentlichungsnummer: WO 1999/006261

(56) Entgegenhaltungen:
- CH-A- 551 304
- DE-A- 4 446 613
- DE-C- 3 739 172
- FR-A- 2 450 721
- FR-A- 2 615 892

## Beschreibung

Die Erfindung betrifft ein Schließsystem für ein Kraftfahrzeug nach dem 0berbegriff des Patentanspruchs 1 dessen Merkmale aus DE 4446613 A1 bekannt sind.

Kraftfahrzeuge sind zum Schutz vor Diebstahl unter anderem mit mechanischen Verriegelungseinrichtungen für die Lenkradsäule versehen.

Derartige bekannte Verriegelungseinrichtungen für die Lenkradsäule besitzen ein zwischen zwei Positionen bewegbares Sperrglied. Befindet sich das Sperrglied in der ersten Position, so kann dieses in blockierenden Eingriff mit der Lenkradsäule gebracht werden. Sobald hierbei das Lenkrad in eine bestimmte Lage gedreht wird, kommt dann das Sperrglied in Eingriff mit der Lenkradsäule, womit eine nachfolgende Benutzung des Lenkrads unterbunden ist. In der zweiten Position steht das Sperrglied außer Eingriff mit der Lenkradsäule, so daß das Lenkrad bestimmungsgemäß benutzbar ist. Die Bewegung des Sperrgliedes zwischen den beiden Positionen wird wiederum vom Zündschloß ausgelöst, das der Benutzer über den zugehörigen Schlüssel zur In- oder Außerbetriebnahme des Kraftfahrzeugs betätigt.

Erfolgt die Außerbetriebnahme während sich das Kraftfahrzeug noch bewegt, so besteht die Gefahr, daß das Kraftfahrzeug manövrierunfähig wird. Es ist unmittelbar ersichtlich, daß diese Situation zu einer Gefährdung des Benutzers führt.

Aus der FR-A-2 450 721 ist ein aus einer Lenkradverriegelung und einem Zündschloß bestehendes Schließsystem für ein Kraftfahrzeug bekannt, bei dem diese Gefährdung verhindert ist. Das Zündschloß besitzt einen Rotor für einen Schlüssel, wobei mittels des Rotors ein zwischen einer ersten verrastenden und einer zweiten freigegebenen Position bewegbares Sperrglied für die Lenkradverriegelung betätigbar ist. Um eine Verrastung der Lenkradverriegelung zu verhindern, wenn der Schlüssel aus dem Zündschloß abgezogen ist und das Kraftfahrzeug sich noch bewegt, weist das Schließsystem eine Arretierung des Sperrgliedes in der zweiten, freigegebenen Position auf. Hierzu ist im Kraftfahrzeug ein Detektor für die Bewegung oder Nichtbewegung des Kraftfahrzeugs angeordnet. Der Detektor gibt ein Signal an eine Steuerschaltung, die wiederum eine aus einem Elektromagneten und einen Stift bestehende elektromagnetische Sperre erregt, wenn das Kraftfahrzeug in Bewegung ist. Der Stift wird bei Erregung der elektromagnetischen Sperre durch eine Öffnung in das Gehäuse des Zündschlosses hineinbewegt und verhindert dann die Rückbewegung des Sperrgliedes von der freigegebenen zweiten Position in die verrastende erste Position.

Bei dem bekannten Schließsystem ist zwar die Sicherheit des Benutzers gesteigert, jedoch sind hierfür weitere Bauteile notwendig, die in der Nähe des Schließsystems angeordnet sind. Dadurch ist ein zusätzlicher Platzbedarf im Kraftfahrzeug erforderlich, so daß dieses Schließsystem in kleineren Kompaktfahrzeugen kaum einsetzbar ist.

Ein herkömmliches Schließsystem, bei dem das Zündschloß und die Verriegelungseinrichtung für das Lenkrad in einem Gehäuse angeordnet sind, ist aus der CH-A-551 304 bekannt. Das Zündschloß besitzt einen Rotor zur Aufnahme des Schlüssels, wobei sich am Ende des Rotors eine Schließwalze mit einer Steuerkurve befindet. Mittels der Steuerkurve ist das Sperrglied der Verriegelungseinrichtung verschiebbar. Im Gehäuse ist weiter ein mittels einer Kegelradverzahnung von der Schließwalze betätigbarer Lastschalter in etwa senkrecht zum Gehäuse angeordnet. Diesem relativ kompakt aufgebauten Schließsystem fehlt es an einer Arretierung des Sperrgliedes in der zweiten freigebenen Position, womit wiederum eine Gefährdung des Benutzers eintreten kann.

Der Erfindung liegt ausgehend von der DE 44 46613 A1 die Aufgabe zugrunde, das eine Arretierung für die Verriegelungseinrichtung aufweisende Schließsystem kompakter auszubilden.

Diese Aufgabe wird bei einem gattungsgemäßen Schließsystem durch die kennzeichnenden Merkmale des Anspruchs 1 gelöst.

Das Sperrglied ist in der zweiten Position mittels einer elektromagnetischen Sperre arretierbar, wobei die Arretierung erst dann aufgehoben wird, wenn sich das Kraftfahrzeug im Stillstand befindet. Zur Feststellung, ob sich das Kraftfahrzeug im Stillstand befindet, kann ein die Bewegung des Kraftfahrzeugs anzeigendes Signal verwendet werden. Beispielsweise kann es sich hierbei um das fehlende Tachosignal handeln. Erst nachdem die Arretierung aufgehoben und damit das Sperrglied freigegeben ist, kann dann die Bewegung des Sperrgliedes von der zweiten in die erste Position durch Entfernen des Schlüssels aus dem Schloß ausgelöst werden.

Das Schloß besitzt einen mittels eines Schlüssels drehbaren Rotor, wobei in Abhängigkeit von der Rotorstellung das Sperrglied zwischen der ersten und zweiten Position bewegt wird. Hierzu kann das Sperrglied elektromagnetisch oder elektromotorisch durch ein vom Schloß abgegebenes Signal bewegbar sein. Ebenso ist eine mechanische Kopplung des Sperrgliedes mit dem Rotor des Schlosses möglich. Die elektromagnetische Sperre für die Arretierung dient zusätzlich für die Blockierung des Rotors.

Weitere Ausgestaltungen der Erfindung sind Gegenstand der Unteransprüche.

In einer Weiterbildung kann die mechanische Kopplung des Sperrgliedes mit dem Rotor über einen federbelasteten Schieber erfolgen, wobei der Schieber mittels eines Bolzens in das Sperrglied eingreift. Um den Schieber bei Drehung des Rotors linear gegen die Federkraft so zu verschieben, daß das Sperrglied in Richtung auf die zweite Position bewegt wird, greift ein Gewindegang am Rotor in der Art einer Schnecke an einer Kantenfläche des Schiebers an. Weiter ist an der dem Sperrglied abgewandten Seite des Schiebers ein federbelastetes Nockenelement angeordnet. Das Nockenelement kommt bei Bewegung des Schiebers mitsamt dem Sperrglied von der ersten Position in Richtung auf die zweite Position an einem Halteteil eines einarmigen Hebels, der drehbar am Rotor gelagert ist, in Anlage. Dabei wird die Feder gespannt und in etwa bei Erreichen der zweiten Position wird das Nockenelement vom Halteteil freigegeben, so daß eine Aufnahme am Nockenelement in hintergreifenden Eingriff mit dem Halteteil gelangt. Aufgrund dieses Eingriffs ist der Schieber mitsamt dem Sperrglied mechanisch in der zweiten Position arretiert. Ein im Schloß befindlicher Schlüssel wirkt über einen Ansatz auf den Hebel ein, wodurch der Hebel in dieser Lage, in der das Sperrglied arretiert ist, festgehalten ist. Erst bei Entfernen des Schlüssels aus dem Schloß kann der Hebel diese Lage verlassen, wodurch die Arretierung aufgehoben wird, allerdings nur, wenn sich das Kraftfahrzeug im Stillstand befindet.

Falls sich das Kraftfahrzeug nicht im Stillstand befindet, wird die Arretierung aufrechterhalten. Zu diesem Zweck ist bevorzugterweise im Rotor ein bewegbarer, federbelasteter Stößel angeordnet, der mit einem Ende auf den Hebelarm des Hebels einwirkt, wenn sich das Sperrglied in der zweiten Position befindet. Aufgrund dieser Einwirkung ist der Hebel in einer Lage fixiert, in der wiederum das Nockenelement vom Halteteil festgehalten wird. Auf das andere Ende des Stößels wirkt ein Schwenkelement ein, das seinerseits den Stößel festhält. Mittels einer elektromagnetischen Sperre ist das Schwenkelement verschwenkbar, wobei die elektromagnetische Verschwenkung des Schwenkelements erst beim Stillstand des Kraftfahrzeugs ausgelöst wird und dabei dann den Stößel freigibt. Nach Freigabe des Stößels und Entfernen des Schlüssels aus dem Schloß drückt das Nockenelement aufgrund der Federkraft im Schieber und gegebenenfalls der Federkraft im Sperrglied das Halteteil mitsamt dem Hebel gegen die Federkraft am Stößel aus der Bewegungsbahn des Nockenelements. Dadurch ist der Schieber freigegeben, so daß sich der Schieber dann aufgrund seiner Federkraft in die erste Position zurückbewegt. Befindet sich der Schieber in der ersten Positon, so ist wiederum der Bolzen freigegeben und damit die Arretierung des Sperrglieds aufgehoben. Somit kann sich das Sperrglied in die erste Position bewegen, wo es schließlich bei entsprechender Stellung der Lenkradsäule aufgrund der einwirkenden Federkraft in blockierenden Eingriff mit der Lenkradsäule gelangt. Hervorzuheben ist, daß sowohl die Freigabe des Stößels durch die elektromagnetische Sperre als auch das Entfernen des Schlüssels aus dem Schloß notwendig sind, damit der Hebel bewegegbar und die Arretierung des Sperrglieds in der zweiten Position aufgehoben ist.

Bei einer Weiterbildung befinden sich das Zündschloß und die Verriegelungseinrichtung in einem gemeinsamen Gehäuse und bilden ein Bauteil, das an der Lenkradsäule des Kraftfahrzeugs angeordnet ist. Dieses Bauteil enthält weiter Schaltelemente in der Art eines Lastschalters für die elektrische Energieversorgung des Anlassers, der Zündung, der Motorsteuerung sowie sonstiger Aggregate. Bevorzugterweise ist der Lastschalter quer zum Rotor des Zündschlosses angeordnet, so daß ein besonders kompaktes Bauteil erhalten wird. Die Schaltelemente des Lastschalters sind mittels einer Nockensteuerung an einer drehbaren Lastschalterwelle betätigbar, wobei die Betätigung der Schaltelemente in Abhängigkeit von der Stellung des Rotors im Zündschloß erfolgt. Die Bewegung des Rotors wird über ein am Rotor angebrachtes Ritzel und einer Verzahnung an der Lastschalterwelle, die beispielsweise in der Art eines Kegelzahnrades zusammenwirken, auf die Lastschalterwelle übertragen.

Beim Zündschloß kann es sich um ein elektronisches Zündschloß handeln, wobei die Bewegung des Rotors im Zündschloß mittels eines verschwenkbaren Sperrhebels der elektromagnetischen Sperre blockierbar ist. Nach Einführung des elektronischen Schlüssels in das Zündschloß findet eine Codeübertragung zwischen dem elektronischen Schlüssel und dem Zündschloß statt. Nach erfolgreicher Codeübertragung gibt die elektromagnetische Sperre durch Verschwenken des Sperrhebels den Rotor zur manuellen Drehung über den Schlüssel frei. Diese elektromagnetische Sperre wird auch gleichzeitig als elektromagnetische Sperre für die Arretierung des Sperrgliedes der Verriegelungseinrichtung in der zweiten Position verwendet, wobei der Sperrhebel für den Rotor am Schwenkelement für die Verriegelungseinrichtung angelenkt ist.

Die mit der Erfindung erzielten Vorteile bestehen insbesondere in einer Erhöhung der Sicherheit für den Benutzer. Selbst bei einer Fehlbedienung, indem der Benutzer den Schlüssel aus dem Schloß entfernt, obwohl das Kraftfahrzeug sich noch bewegt, ist die Manövrierfähigkeit des Kraftfahrzeugs gegeben. Ein Einrasten der Lenkungsverriegelung ist in diesem Falle ausgeschlossen.

Trotz der zusätzlichen Funktionalität handelt es sich bei der erfindungsgemäßen Lenkungsverriegelung um ein kompaktes Bauteil. Dieses Bauteil kann zudem das komplette Zündschloß in platzsparender Art aufnehmen. Dadurch wird die Anordnung des Bauteils auch in kleinen, kompakten Kraftfahrzeugen erleichtert und es werden Bauelemente, beispielsweise eine weitere elektromagnetische Sperre für das Schwenkelement der Verriegelungseinrichtung eingespart. Außerdem wird die Montage des Bauteils im Kraftfahrzeug vereinfacht. Somit lassen sich mit der Erfindung auch Kosteneinsparungen realisieren.

Ein Ausführungsbeispiel der Erfindung mit Weiterbildungen ist in den Zeichnungen dargestellt und wird im folgenden näher beschrieben. Es zeigen
- Fig. 1: schematisch eine Funktionsübersicht eines mittels eines elektronischen Schlüssels betätigbaren Schließsystems in einem Kraftfahrzeug,
- Fig. 2: einen Schnitt durch ein im Schließsystem enthaltenes Zündschloß mit Verriegelungseinrichtung, wobei der Schlüssel im Zündschloß gesteckt ist,
- Fig. 3: einen Ausschnitt aus Fig. 2 im Bereich der Verriegelungseinrichtung in vergrößerter Darstellung, wobei das Sperrglied der Verriegelungseinrichtung sich in der ersten Position befindet,
- Fig. 4: einen Schnitt entlang der Linie 4-4 aus Fig. 2 in vergrößerter Darstellung,
- Fig. 5: einen Schnitt entlang der Linie 5-5 aus Fig. 2 in vergrößerter Darstellung,
- Fig. 6: einen Ausschnitt wie in Fig. 3, wobei das Sperrglied in Richtung auf die zweite Position bewegt ist und der Schlüssel im Zündschloß befindlich ist,
- Fig. 7: einen Ausschnitt wie in Fig. 3, wobei das Sperrglied sich in der zweiten Position befindet und der Schlüssel im Zündschloß befindlich ist,
- Fig. 8: einen Ausschnitt wie in Fig. 3, wobei das Sperrglied in Richtung auf die erste Position bewegt ist und der Schlüssel aus dem Schloß entfernt ist, und
- Fig. 9: einen Schnitt entlang der Linie 9-9 aus Fig. 8.

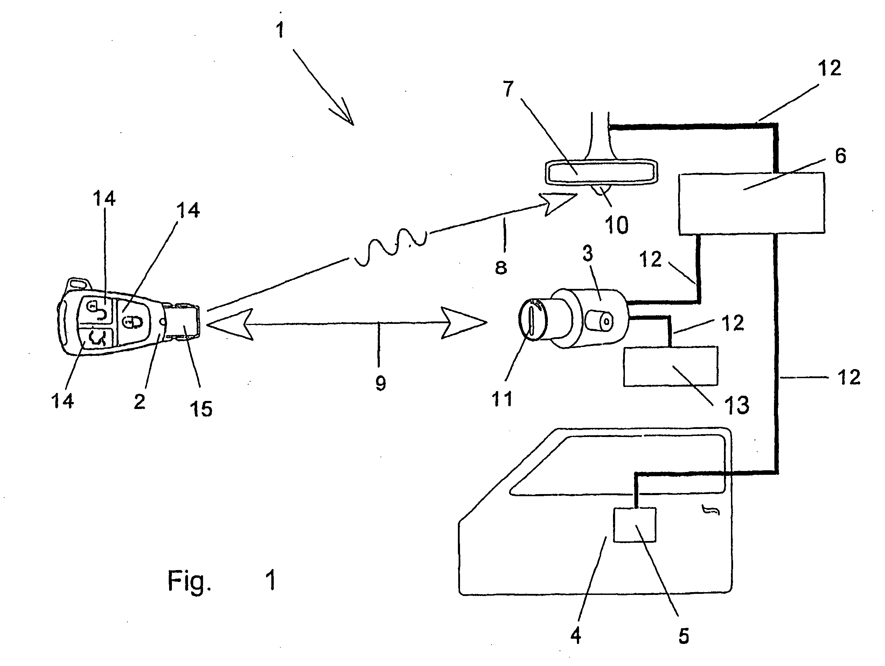

In Fig. 1 ist ein für ein Kraftfahrzeug bestimmtes Schließsystem 1 schematisch gemäß einem Teil seiner Funktionen gezeigt. Mit Hilfe eines elektronischen Schlüssels 2 läßt sich das Schließsystem 1 zur Zugangsberechtigung fernbedienbar ansteuern, im vorliegenden Fall lassen sich die Autotüren 4 des Kraftfahrzeugs fernbedienbar bis zu einer gewissen maximalen Entfernung vom Kraftfahrzeug ver- und entriegeln, sowie gegebenenfalls noch weitere Funktionen am Kraftfahrzeug auslösen.

Zur Ansteuerung der genannten Funktionen ist zwischen dem Schlüssel 2 und einer beispielsweise am Innenspiegel 7 zentral im Kraftfahrzeug angeordneten Empfangs- und Sendeeinrichtung 10 für das Schließsystem 1 ein codiertes Betriebssignal 8 übertragbar. Die Übertragung des Betriebssignals 8 ist mittels manuell vom Benutzer betätigbarer Tasten 14 am Schlüssel 2 auslösbar. Das übertragene Betriebssignal 8 wird einer im Kraftfahrzeug befindlichen Signalverarbeitungseinrichtung 6 zugeführt und nach positiver Auswertung des Betriebssignals 8, d.h. falls es sich um den berechtigten Schlüssel 2 handelt, wird ein beispielsweise in der jeweiligen Autotüre 4 befindliches Steuergerät 5, das mit der Signalverarbeitungseinrichtung 6 beispielsweise über ein Bussystem 12, wie den bekannten CAN-Bus, in Verbindung steht, zur Ver- oder Entriegelung der Autotüren 4 betätigt. Bei dem Steuergerät 5 kann es sich zum Beispiel um eine an sich bekannte Zentralverriegelung handeln.

Mit dem elektronischen Schlüssel 2 ist zusätzlich die Wegfahrsperre des Kraftfahrzeugs betätigbar. Hierfür besitzt das Schließsystem 1 ein elektronisches Zündschloß 3, das mit einem zugehörigen Betriebsaggregat 13 in Verbindung steht. Beim Betriebsaggregat 13 kann es sich beispielsweise um die elektronische Motorsteuerung des Kraftfahrzeugs handeln. Nachdem der Schlüssel 2 mit seinem Frontteil 15 in eine Aufnahme 11 des Zündschlosses 3 eingeführt ist, erfolgt der Austausch wenigstens eines codierten Betriebssignals 9 zwischen dem Schlüssel 2 und dem Zündschloß 3. Bei dem Betriebssignal 9 kann es sich um ein optisches Signal, beispielsweise um ein Infrarotsignal handeln. Nach positiver Auswertung des Betriebssignals 9 wird das Zündschloß 3 freigegeben und das Betriebsaggregat 13 kann dann in Betrieb genommen werden, wie nachfolgend noch näher erläutert ist.

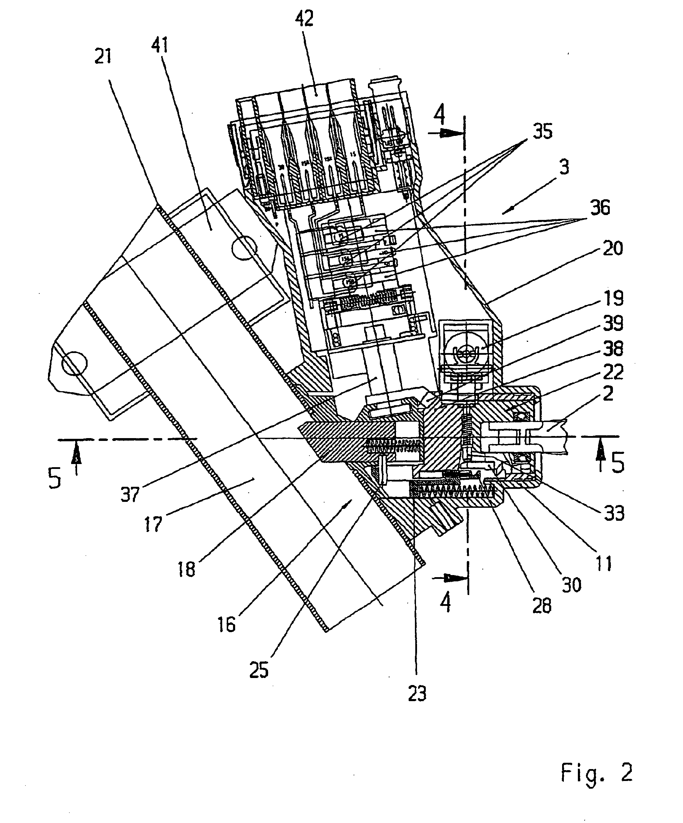

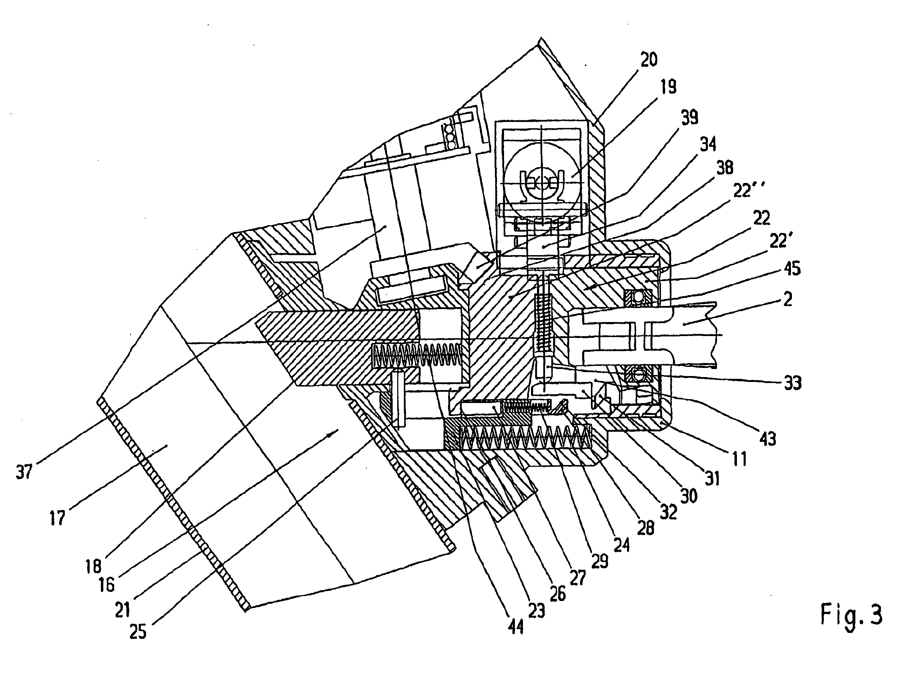

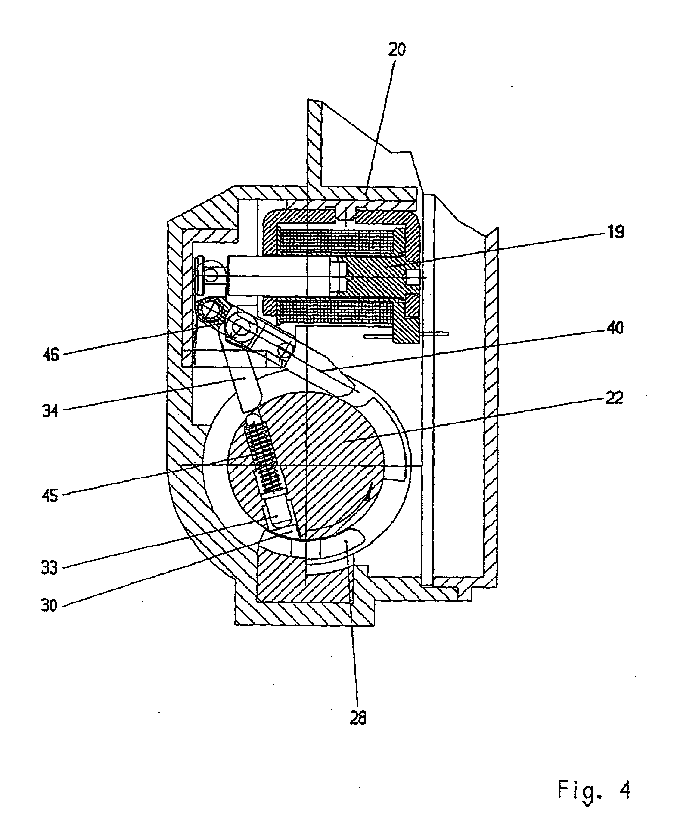

Das Zündschloß 3 ist in der Ausgangsstellung, in der sich das Kraftfahrzeug außer Betrieb befindet, im Schnitt näher in Fig. 2 zu sehen. Das Zündschloß 3 besitzt ein Gehäuse 20, das am Mantelrohr 21 der Lenkradsäule 17 des Kraftfahrzeugs mittels schematisch angedeuteter Befestigungselemente 41 angebracht ist. Im Zündschloß 3 ist ein aus zwei Teilen 22', 22", die in Fig. 3 näher bezeichnet sind, bestehender Rotor 22 angebracht, wobei sich im Rotor 22 die Aufnahme 11 für den Schlüssel 2 fortsetzt. Der Rotor 22 ist mittels des in der Aufnahme 11 eingesteckten elektronischen Schlüssels 2 manuell drehbar. In der Ausgangsstellung ist jedoch die Bewegung des Rotors 22 mittels eines in Fig. 4 gezeigten, verschwenkbaren Sperrhebels 40 einer elektromagnetische Sperre 19 zunächst blockiert.

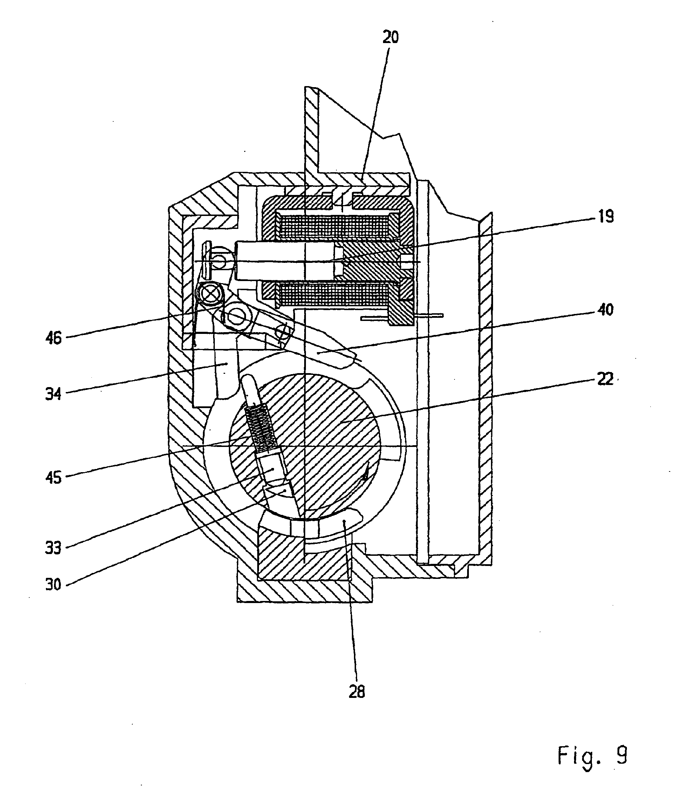

Wird nun der Schlüssel 2 in die Aufnahme 11 eingesteckt, wie in Fig. 2 gezeigt ist, so findet die Codeübertragung zwischen dem Schlüssel 2 und dem Zündschloß 3 statt. Der Code wird dann in einer nicht weiter gezeigten Elektronik im Zündschloß 3 sowie gegebenenfalls im Schlüssel 2 ausgewertet. Ist die Auswertung des Codes erfolgreich, d.h. handelt es sich um den berechtigten Schlüssel, so gibt die elektromagnetische Sperre 19 durch Verschwenken des Sperrhebels 40 den Rotor 22 zur Drehung durch den Benutzer über den Schlüssel 2 frei, was in Fig. 9 gezeigt ist.

Im Gehäuse 20 befinden sich, wie weiter aus Fig. 2 hervorgeht, Schaltelemente 35 in der Art eines Lastschalters. Diese Schaltelemente 35 dienen zum Schalten der elektrischen Energieversorgung von Betriebsaggregaten 13 des Kraftfahrzeugs, bei denen es sich, wie bereits erwähnt, beispielsweise um die Motorsteuerung, den Anlasser u. dgl. handelt. Dazu sind die Schaltelemente 35 des Lastschalters mittels einer Nockensteuerung 36 an einer drehbaren Lastschalterwelle 37 in Abhängigkeit von der Stellung des Rotors 22 betätigbar. Am Gehäuse 20 befindet sich eine mit den Schaltelementen 35 in Verbindung stehende Steckaufnahme 42, an der die Zuleitungen zu den Betriebsaggregaten 13 sowie das Bussystem 12 angeschlossen sind.

Um ein möglichst kompaktes Gehäuse 20 zu erzielen, ist der Lastschalter quer zum Rotor 22 des Zündschlosses 3 angeordnet. Zur Übertragung der Bewegung des Rotors 22 auf die Lastschalterwelle 37 ist am Rotor 22 ein Ritzel 38 angebracht, wobei das Ritzel 38 zweckmäßigerweise in das Teil 22'' des Rotors 22 integriert ist. Das Ritzel 38 greift in eine Verzahnung 39 an der Lastschalterwelle 37 ein, so daß das Ritzel 38 und die Verzahnung 39 in der Art eines Kegelzahnrades zur Drehung der Lastschalterwelle 37 durch den Rotor 22 zusammenwirken.

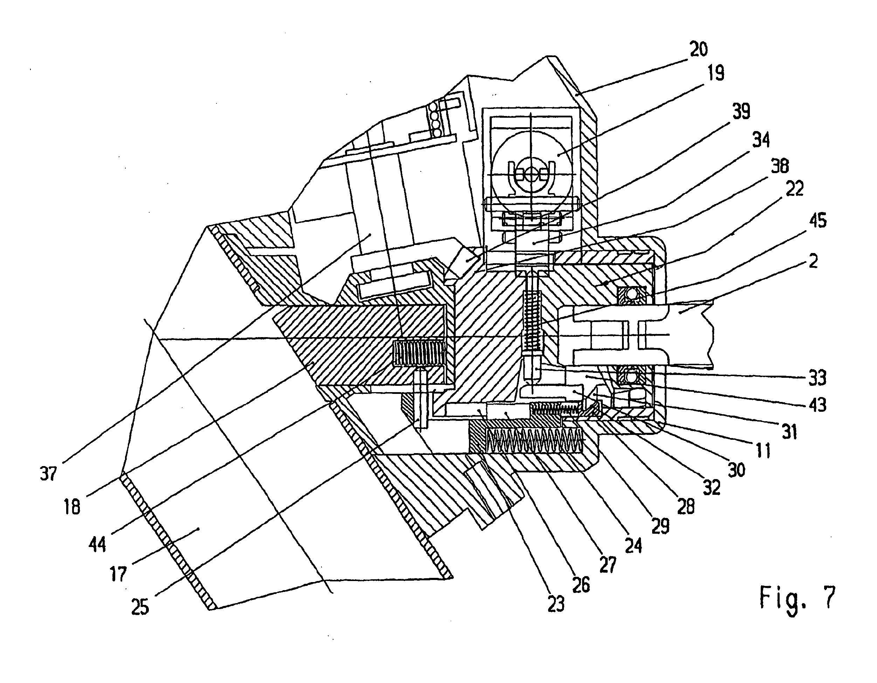

Neben der erläuterten Wegfahrsperre besitzt das Kraftfahrzeug als weitere Sicherung gegen Diebstahl eine Verriegelungseinrichtung 16 für die Lenkradsäule 17. Die in der Ausgangsstellung des Zündschlosses 3 näher in Fig. 3 gezeigte Verriegelungseinrichtung 16 besitzt ein zwischen zwei Positionen bewegbares Sperrglied 18. Das Sperrglied 18 ist in der ersten Position in blockierenden Eingriff mit der Lenkradsäule 17 bringbar. Wie in Fig. 3 zu sehen ist, ist in der Ausgangsstellung das Sperrglied 18 in die Lenkradsäule 17 eingerastet. In der zweiten Position steht das Sperrglied 18 außer Eingriff mit der Lenkradsäule 17, was näher in Fig. 7 zu sehen ist. Ist das Sperrglied 18 entsprechend der ersten Position eingerastet, so ist die Lenkradsäule 17 aufgrund der Blockierung nicht bewegbar und folglich das Kraftfahrzeug nicht manövrierbar. In der zweiten Position hingegen ist die Lenkung des Kraftfahrzeugs freigegeben.

Die Bewegung des Sperrgliedes 18 zwischen der ersten und der zweiten Position wird von dem Schließsystem 1 im Kraftfahrzeug, und zwar vom elektronischen Zündschloß 3 ausgelöst. Hierzu kann das Sperrglied 18 elektromagnetisch, elektromotorisch o. dgl. bewegbar ausgestaltet sein, wobei die Bewegung durch ein vom Zündschloß 3 abgegebenes Signal erfolgen kann. Besonders bevorzugt ist eine Ausgestaltung, in der das Sperrglied 18 mechanisch mit dem Rotor 22 derart gekoppelt ist, daß das Sperrglied 18 durch Drehung des Rotors 22 zwischen der ersten und der zweiten Position bewegbar ist. Eine derartige Ausbildung, bei der zweckmäßigerweise die Verriegelungseinrichtung 16 im Gehäuse 20 des Zündschlosses 3 angeordnet ist, soll nachfolgend näher erläutert werden.

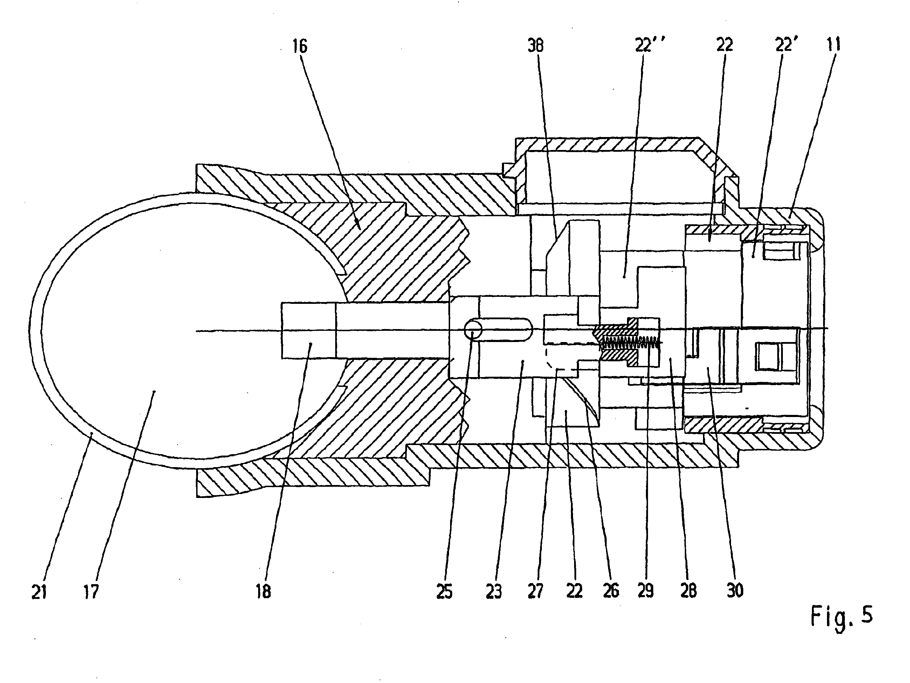

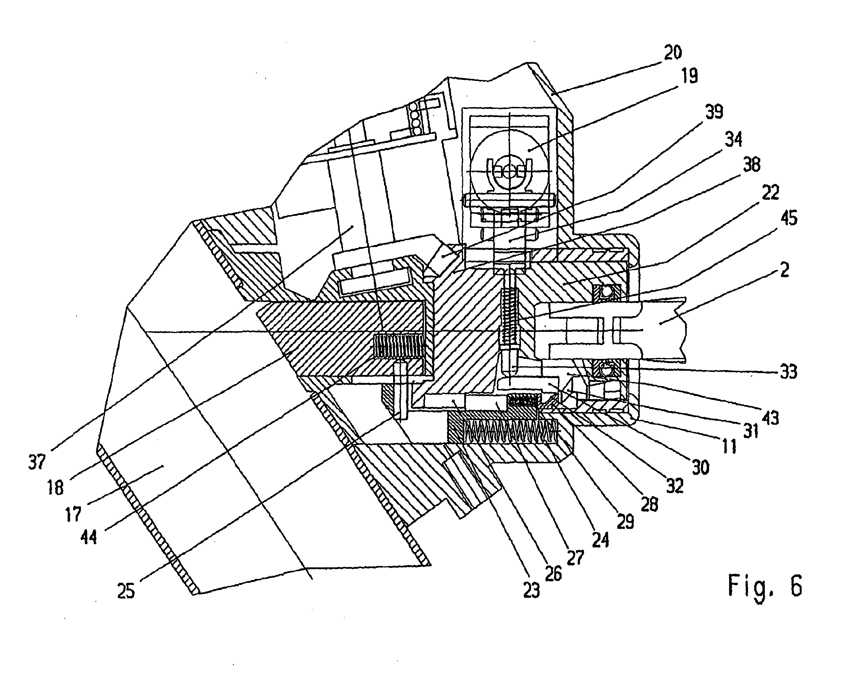

Wie aus Fig. 3 näher hervorgeht, erfolgt die Kopplung zwischen dem Rotor 22 und dem Sperrglied 18 über einen durch eine Feder 24 belasteten Schieber 23, der mittels eines Bolzens 25 in das Sperrglied 18 eingreift. Ein besonders gut in Fig. 5 zu sehender Gewindegang 26 am Rotor 22 greift in der Art einer Schnecke an einer Kantenfläche 27 des Schiebers 23 an, um den Schieber 23 bei Drehung des Rotors 22 linear gegen die Kraft der Feder 24 zu verschieben. Aufgrund dieser Verschiebung wird dann durch den Bolzen 25 das Sperrglied 18 entgegen der Kraft einer Feder 44 in Richtung auf die zweite Position bewegt, wie in Fig. 6 gezeigt ist. Nach Erreichen der zweiten Position befindet sich das Zündschloß 3 in der in Fig. 7 gezeigten Betriebsstellung für das Kraftfahrzeug.

Am Schieber 23 ist an der dem Sperrglied 18 abgewandten Seite ein mittels einer Feder 29 belastetes Nockenelement 28 angeordnet. Das Nockenelement 28 kommt bei Bewegung des Schiebers 23 mitsamt dem Sperrglied 18 von der ersten Position in Richtung auf die zweite Position an einem Halteteil 31 eines Hebels 30 in Anlage, was näher aus Fig. 6 hervorgeht. Der Hebel 30 ist als einarmiger Hebel ausgebildet und drehbar am Rotor 22 gelagert. Eine Drehung des Hebels 30 wird jedoch dadurch verhindert, daß der in der Aufnahme 11 befindliche Schlüssel 2 an einem Ansatz 43 des Hebels 30 anliegt und dadurch den Hebel 30 niederhält. Durch die Anlage des Nockenelements 28 am Halteteil 31 wird die Feder 29 gespannt. In etwa bei Erreichen der zweiten Position für das Stellglied 18 wird das Nockenelement 28 vom Halteteil 31 derart freigegeben, daß sich die Feder 29 etwas entspannen kann und dabei das Nockenelement 28 hinter das Halteteil 31 schnappt. Dadurch gelangt bei Rückdrehung des Rotors 22 bis zur Betriebsstellung, nachdem das Kraftfahrzeug in Betrieb genommen ist, eine Aufnahme 32 am Nockenelement 28 in hintergreifenden Eingriff mit dem Halteteil 31, wie in Fig. 7 gezeigt ist. Dieser Eingriff bewirkt wiederum, daß das Nockenelement 28 festgehalten und folglich der Schieber 23 mitsamt dem Sperrglied 18 in der zweiten Position arretiert ist. Solange der Schlüssel 2 in der Aufnahme 11 befindlich ist, kann diese Arretierung nicht aufgehoben werden, da der Schlüssel 2 über den Ansatz 43 die Drehung des Hebels 30 verhindert. In der Betriebsstellung ist daher eine Rückbewegung des Schiebers 23 und des Sperrglieds 18 in die erste Position nicht möglich, womit ein blockierender Eingriff des Sperrgliedes 18 in die Lenkradsäule 17 folglich während des ordnungsgemäßen Betriebs des Kraftfahrzeugs nicht vorkommen kann.

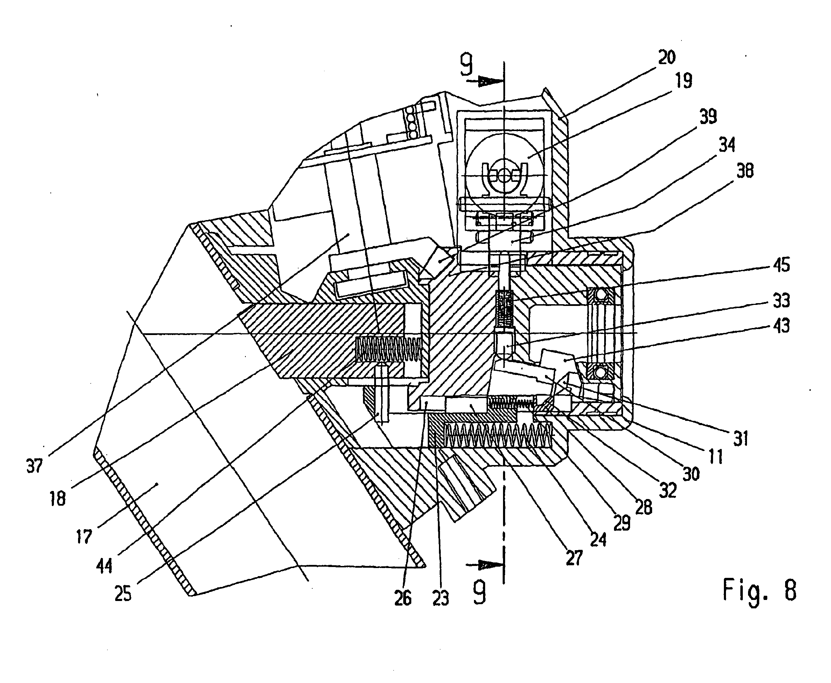

Zur Außerbetriebnahme des Kraftfahrzeugs wird der Schlüssel 2, der in der Aufnahme 11 des gemäß Fig. 7 in Betriebsstellung befindlichen Zündschlosses 3 eingesteckt ist, mitsamt dem Rotor 22 in die Ausgangsstellung zurückgedreht und aus dem Zündschloß 3 entnommen. Nach der Entnahme ist der Ansatz 43 am Hebel 30 unbelastet, so daß die Drehung des Hebels 30 freigegeben ist. Aufgrund der Rückstellkraft durch die Feder 24 im Schieber 23 und gegebenenfalls der Feder 44 im Sperrglied 18 drückt nun das Nockenelement 28 das Halteteil 31 mitsamt dem Hebel 30 aus der Bewegungsbahn des Nockenelements 28, was näher in Fig. 8 zu sehen ist. Dadurch ist nun der Schieber 23 freigegeben und wird aufgrund der Federkraft in die erste Position zurückbewegt. Weiter ist auch der Bolzen 25 freigegeben und damit die Arretierung des Sperrglieds 18 aufgehoben, so daß das Sperrglied 18 sich in Richtung der ersten Position bewegt und bei entsprechender Stellung des Lenkrades schließlich aufgrund der einwirkenden Kraft der Feder 44 in blockierenden Eingriff mit der Lenkradsäule 17 gebracht wird, womit wieder die Ausgangsstellung nach Fig. 3 eingenommen ist.

Findet jedoch die beschriebene Außerbetriebnahme des Kraftfahrzeugs unter Entfernung des Schlüssels 2 aus der Aufnahme 11 statt, solange sich das Kraftfahrzeug noch bewegt, so wird das Kraftfahrzeug manövrierunfähig. Dadurch geht eine beträchtliche Gefährdung des Benutzers einher. Um diese Gefahrenquelle zu beheben, ist erfindungsgemäß das Sperrglied 18 in der zweiten Position entsprechend der obigen Beschreibung arretierbar, und die Arretierung gibt das Sperrglied 18 lediglich dann zur Bewegung in die erste Position frei, wenn das Kraftfahrzeug im Stillstand befindlich ist. Die Freigabe der Arretierung erfolgt bevorzugterweise bei Vorliegen eines Signals, das den Stillstand des Kraftfahrzeugs codiert. Liegt das Signal für Stillstand des Kraftfahrzeugs nicht vor, so bleibt das Sperrglied 18 in der zweiten Position weiter arretiert. Dieses Signal kann von einem Sensor an den Rädern des Kraftfahrzeugs erzeugt werden. Beispielsweise kann es sich bei diesem Signal um das fehlende Tachosignal handeln, wobei das Tachosignal ansonsten zur Steuerung der Geschwindigkeitsanzeige im Kraftfahrzeug verwendet wird. Ist diese weitere Arretierung freigegeben, so wird die Bewegung des Sperrgliedes 18 von der zweiten in die erste Position durch Entfernen oder nach Entfernen des Schlüssels 2 aus dem Zündschloß 3 ausgelöst, wie bereits oben beschrieben ist.

Die Freigabe der weiteren Arretierung des Sperrglieds 18 in der zweiten Position erfolgt mittels einer elektromagnetischen Sperre 19. Es handelt sich zweckmäßigerweise um die elektromagnetische Sperre 19, die auch zur Blockierung der Bewegung des Rotors 22 verwendet wird. Damit dient in dieser Weiterbildung die elektromagnetische Sperre 19 sowohl als Sperre für die Bewegung des Rotors 22 als auch zur weiteren Arretierung des Sperrgliedes 18. Die nähere Ausgestaltung der weiteren Arretierung geht aus Fig. 4 näher hervor.

Mittels der elektromagnetischen Sperre 19 ist ein Schwenkelement 34 elektromagnetisch verschwenkbar. Zweckmäßigerweise ist der Sperrhebel 40 für den Rotor 22 am Schwenkelement 34 der Verriegelungseinrichtung 16 angelenkt. Im Rotor 22 ist weiter ein bewegbarer, mit einer Feder 45 belasteter Stößel 33 angeordnet. Der Stößel 33 wirkt mit einem Ende auf den Hebelarm des Hebels 30 ein. Am anderen Ende des Stößels 33 befindet sich das Schwenkelement 34. Wie der Fig. 4 und 7 zu entnehmen ist, wirkt insbesondere in der zweiten Position auf das andere Ende des Stößels 33 das Schwenkelement 34 derart ein, daß der Stößel 33 unbeweglich gehalten ist. Dadurch ist der Hebel 30 in der Lage fixiert, in der wiederum das Nockenelement 28 vom Halteteil 31 festgehalten wird. Damit ist zunächst das Sperrglied 18 in der zweiten Position weiter arretiert, selbst wenn der Schlüssel 2 aus der Aufnahme 11 entfernt wird.

Liegt jedoch das den Stillstand des Kraftfahrzeugs codierende Signal vor, so wird die elektromagnetische Verschwenkung des Schwenkelements 34 an der elektromagnetische Sperre 19 ausgelöst, was in Fig. 8 und 9 näher gezeigt ist. Sobald das Schwenkelement 34 verschwenkt ist, wird dann die Bewegung des Stößels 33 freigegeben. Entsprechend der bereits oben beschriebenen Rückstellung des Sperrglieds 18 in die erste Position bei Entfernung oder nach bereits erfolgter Entfernung des Schlüssels 2 aus der Aufnahme 11 wird der Hebel 30 durch die Rückstellkraft der Feder 24 und gegebenenfalls der Feder 44 gedreht, so daß auch der Stößel 33 gegen die Kraft der Feder 45 verschoben wird. Nachdem das Nockenelement 28 die in Fig. 8 gezeigte Position passiert hat, wird der Stößel 33 durch die Kraft der Feder 45 wieder zurückgeschoben, wobei auch der Hebel 30 wieder in seine ursprüngliche Lage verstellt wird. Eine Schenkelfeder 46 am Schwenkelement 34 sorgt nach Abschaltung der elektromagnetischen Sperre 19 für eine Rückstellung des Schwenkelements 34 in die Lage, in der der Stößel 33 wieder festgehalten ist.

Gemäß der beschriebenen bevorzugten Ausführung bilden die Verriegelungseinrichtung 16 und das Zündschloß 3 ein gemeinsames Bauteil. Die Erfindung ist jedoch nicht auf das beschriebene und dargestellte Ausführungsbeispiel beschränkt. So kann die Verriegelungseinrichtung auch getrennt vom Zündschloß angeordnet sein, wobei dann die Verriegelungseinrichtung beispielsweise elektromotorisch bewegt und über entsprechende Signale vom Zündschloß angesteuert wird. Weiter kann die Verriegelungseinrichtung nicht nur zur Blockierung der Lenkradsäule sondern auch zur Blockierung des Getriebeschalthebels eines Kraftfahrzeugs o. dgl. Verwendung finden. Im übrigen kann auch ein sonstiges Schloß im Schließsystem, beispielsweise ein Türschloß, oder ein im Schließsystem angeordnetes Steuergerät, wie das in Fig. 1 gezeigte Signalverarbeitungsgerät 6, zur Ansteuerung der Verriegelungseinrichtung herangezogen werden.

### Bezugszeichen-Liste:

- 1:: Schließsystem
- 2:: elektronischer Schlüssel
- 3:: Zündschloß
- 4:: Autotüre
- 5:: Steuergerät
- 6:: Signalverarbeitungsgerät
- 7:: Innenspiegel
- 8,9:: Betriebssignal
- 10:: Empfangs- und Sendeeinrichtung
- 11:: Aufnahme (von Zündschloß)
- 12:: Bussystem
- 13:: Betriebsaggregat
- 14:: Taste (am Schlüssel)
- 15:: Frontteil (am Schlüssel)
- 16:: Verriegelungseinrichttung
- 17:: Lenkradsäule
- 18:: Sperrglied
- 19:: elektromagnetische Sperre
- 20:: Gehäuse
- 21:: Mantelrohr (der Lenkradsäule)
- 22:: Rotor (von Zündschloß)
- 22':: Teil (von Rotor)
- 22'':: Teil (von Rotor)
- 23:: Schieber
- 24:: Feder (von Schieber)
- 25:: Bolzen
- 26:: Gewindegang (am Rotor)
- 27:: Kantenfläche (am Schieber)
- 28:: Nockenelement
- 29:: Feder (am Nockenelement)
- 30:: Hebel
- 31:: Halteteil (am Hebel)
- 32:: Aufnahme (am Nockenelement)
- 33:: Stößel
- 34:: Schwenkelement
- 35:: Schaltelement (im Zündschloß)
- 36:: Nockensteuerung
- 37:: Lastschalterwelle
- 38:: Ritzel
- 39:: Verzahnung
- 40:: Sperrhebel (für Rotor)
- 41:: Befestigungselement
- 42:: Steckaufnahme
- 43:: Ansatz (am Hebel)
- 44:: Feder (von Sperrglied)
- 45:: Feder (am Stößel)
- 46:: Schenkelfeder

## Patentansprüche

1. Schließsystem für ein Kraftfahrzeug mit einem Schloss, wie einem elektronischen Zündschloss (3), das einen mittels eines Schlüssels (2), insbesondere eines elektronischen Schlüssels, drehbaren Rotor (22) besitzt, und mit einer Verriegelungseinrichtung (16) für die Lenkradsäule (17) des Kraftfahrzeugs, für den Getriebeschalthebel des Kraftfahrzeugs o. dgl., wobei die Verriegelungseinrichtung (16) ein zwischen zwei Positionen bewegbares Sperrglied (18) besitzt, dessen Bewegung vom Schloss auslösbar ist, wobei das Sperrglied (18) in der ersten Position in blockierenden Eingriff mit der Lenkradsäule (17), dem Getriebeschalthebel o. dgl. bringbar ist und in der zweiten Position außer Eingriff mit der Lenkradsäule (17), dem Getriebeschalthebel o. dgl. steht, wobei das Sperrglied (18) in der zweiten Position mittels einer elektromagnetischen Sperre (19) arretierbar ist und wobei die Bewegung des Rotors (22) in der Ausgangsstellung mittels der elektromagnetischen Sperre (19) blockierbar ist, **dadurch gekennzeichnet, dass** zur Blockierung der Bewegung des Rotors (22) ein Sperrhebel (40) der elektromagnetischen Sperre (19) unmittelbar in den Rotor (22) eingreift und dass die Arretierung das Sperrglied (18) lediglich dann zur Bewegung in die erste Position frei gibt, wenn das Kraftfahrzeug im Stillstand befindlich ist.

2. Schließsystem nach Anspruch 1, **dadurch gekennzeichnet, daß** die Bewegung des Sperrgliedes (18) aus der zweiten in die erste Position bei Vorliegen eines Signals für den Stillstand des Kraftfahrzeugs freigegeben wird, wobei es sich bei dem Signal um das fehlende Tachosignal handelt.

3. Schließsystem nach Anspruch 1 oder 2, **dadurch gekennzeichnet, daß** die Bewegung des Sperrgliedes (18) von der zweiten in die erste Position bei freigegebenem Sperrglied (18) durch Entfernen oder nach Entfernen des zum Schließsystem (1) zugehörigen Schlüssels (2) aus dem Schloß ausgelöst wird.

4. Schließsystem nach Anspruch 1, 2 oder 3, **dadurch gekennzeichnet, daß** das Sperrglied (18) mechanisch durch Kopplung mit dem Schloß oder elektromagnetisch oder elektromotorisch durch ein vom Schloß abgegebenes Signal zwischen der ersten und der zweiten Position bewegbar ist.

5. Schließsystem nach einem der Ansprüche 1 bis 4, **dadurch gekennzeichnet, daß** das Sperrglied (18) mechanisch mit dem Rotor (22) derart gekoppelt ist, daß das Sperrglied (18) durch Drehung des Rotors (22) von der ersten in die zweite Position bewegbar ist, daß die Kopplung über einen durch eine Feder (24) belasteten Schieber (23) erfolgt, daß der Schieber (23) mittels eines Bolzens (25) in das Sperrglied (18) eingreift, und daß ein Gewindegang (26) am Rotor (22) in der Art einer Schnecke an einer Kantenfläche (27) des Schiebers (23) angreift, um den Schieber (23) bei Drehung des Rotors (22) linear gegen die Kraft der Feder (24) so zu verschieben, daß das Sperrglied (18) in Richtung auf die zweite Position bewegt wird.

6. Schließsystem nach einem der Ansprüche 1 bis 5, **dadurch gekennzeichnet, daß** ein mittels einer Feder (29) belastetes Nockenelement (28) am Schieber (23) an der dem Sperrglied (18) abgewandten Seite angeordnet ist, daß das Nockenelement (28) bei Bewegung des Schiebers (23) mitsamt dem Sperrglied (18) von der ersten Position in Richtung auf die zweite Position an einem Halteteil (31) eines drehbar am Rotor (22) gelagerten, einarmigen Hebels (30) in Anlage kommt, wobei die Feder (29) gespannt wird, und daß in etwa bei Erreichen der zweiten Position das Nockenelement (28) vom Halteteil (31) freigegeben wird, so daß eine Aufnahme (32) am Nockenelement (28) in hintergreifenden Eingriff mit dem Halteteil (31) gelangt, wodurch das Nockenelement (28) festgehalten und der Schieber (23) mitsamt dem Sperrglied (18) mechanisch in der zweiten Position arretiert ist.

7. Schließsystem nach einem der Ansprüche 1 bis 6, **dadurch gekennzeichnet, daß** im Rotor (22) ein bewegbarer, mit einer Feder (45) belasteter Stößel (33) angeordnet ist, daß in der zweiten Position der Stößel (33) mit einem Ende auf den Hebelarm des Hebels (30) einwirkt, wodurch der Hebel (30) in einer Lage festgehalten ist, in der wiederum das Nockenelement (28) vom Halteteil (31) festgehalten wird, und daß auf das andere Ende des Stößels (33) ein Schwenkelement (34) zum Festhalten des Stößels (33) einwirkt.

8. Schließsystem nach einem der Ansprüche 1 bis 7, **dadurch gekennzeichnet, daß** ein im Schloß befindlicher Schlüssel (2) über einen Ansatz (43) auf den Hebel (30) einwirkt, wodurch der Hebel (30) ebenfalls in der Lage festgehalten ist, in der wiederum das Nockenelement (28) vom Halteteil (31) festgehalten wird.

9. Schließsystem nach einem der Ansprüche 1 bis 8, **dadurch gekennzeichnet, daß** das Schwenkelement (34) mittels der elektromagnetischen Sperre (19) verschwenkbar ist, daß die elektromagnetische Verschwenkung des Schwenkelements (34) beim Stillstand des Kraftfahrzeugs ausgelöst wird und dabei den Stößel (33) freigibt, daß das Nockenelement (28) nach Freigabe des Stößels (33) und Entfernen des Schlüssels (2) aus dem Schloß aufgrund der Kraft der Feder (24) im Schieber (23) und gegebenenfalls der Kraft der Feder (44) im Sperrglied (18) das Halteteil (31) mitsamt dem Hebel (30) gegen die Kraft der Feder (45) am Stößel (33) aus der Bewegungsbahn des Nockenelements (28) drückt, wodurch der Schieber (23) freigegeben ist und sich aufgrund der Kraft der Feder (24) in die erste Position zurückbewegt, daß dadurch wiederum der Bolzen (25) freigegeben und damit die Arretierung des Sperrglieds (18) aufgehoben ist, und daß sich schließlich das Sperrglied (18) bei entsprechender Stellung der Lenkradsäule (17) aufgrund der einwirkenden Kraft der Feder (44) in die erste Position bewegt.

10. Schließsystem nach einem der Ansprüche 1 bis 9, **dadurch gekennzeichnet, daß** das Zündschloß (3) ein an der Lenkradsäule (17) des Kraftfahrzeugs angeordnetes Gehäuse (20) besitzt, daß die Verriegelungseinrichtung (16) im Gehäuse (20) angeordnet ist, und daß im Gehäuse (20) Schaltelemente (35) in der Art eines Lastschalters für die elektrische Energieversorgung von Betriebsaggregaten (13) des Kraftfahrzeugs, wie Anlasser, Zündung, Motorsteuerung u. dgl., befindlich sind.

11. Schließsystem nach einem der Ansprüche 1 bis 10, **dadurch gekennzeichnet, daß** der Lastschalter quer zum Rotor (22) des Zündschlosses (3) angeordnet ist, daß die Schaltelemente (35) des Lastschalters mittels einer Nockensteuerung (36) an einer drehbaren Lastschalterwelle (37) betätigbar sind, wobei die Betätigung der Schaltelemente (35) in Abhängigkeit von der Stellung des Rotors (22) im Zündschloß (3) erfolgt, und daß die Bewegung des Rotors (22) über ein am Rotor (22) angebrachtes Ritzel (38) und eine Verzahnung (39) an der Lastschalterwelle (37), die beispielsweise in der Art eines Kegelzahnrades zusammenwirken, auf die Lastschalterwelle (37) übertragen wird.

12. Schließsystem nach einem der Ansprüche 1 bis 11, **dadurch gekennzeichnet, daß** die Bewegung des Rotors (22) mittels eines verschwenkbaren Sperrhebels (40) der elektromagnetische Sperre (19) blockierbar ist.

13. Schließsystem nach einem der Ansprüche 1 bis 12, **dadurch gekennzeichnet, daß** der Rotor (22) eine Aufnahme (11) für den elektronischen Schlüssel (2) besitzt, und daß eine Codeübertragung zwischen dem elektronischen Schlüssel (2) und dem Zündschloß (3) bei in der Aufnahme (11) befindlichem Schlüssel (2) stattfindet, wobei bei erfolgreicher Codeübertragung die elektromagnetische Sperre (19) durch Verschwenken des Sperrhebels (40) den Rotor (22) zur manuellen Drehung über den Schlüssel (2) freigibt.

14. Schließsystem nach einem der Ansprüche 1 bis 13, **dadurch gekennzeichnet, daß** der Sperrhebel (40) am Schwenkelement (34) für die Verriegelungseinrichtung (16) angelenkt ist.

## Claims

1. Locking system for a motor vehicle with a lock, such as an electronic ignition lock (3), which has a rotor (22) which can be rotated by a key (2), in particular an electronic key, and with a locking device (16) for the steering wheel column (17) of the motor vehicle, for the gear shift lever of the motor vehicle or the like, the locking device (16) having a blocking member (18) which can be moved between two positions, the movement of which is triggered by the lock, wherein, in the first position, the blocking member (18) can be brought into blocking engagement with the steering wheel column (17), the gear shift lever or the like, and in the second position is disengaged from the steering wheel column (17), the gear shift lever or the like, wherein the blocking member (18) can be arrested in the second position by an electromagnetic catch (19) and wherein the movement of the rotor (22) in the initial position can be blocked by the electromagnetic catch (19), **characterised in that** to block the movement of the rotor (22) a safety lever (40) of the electromagnetic catch (19) engages directly with the rotor (22) and **in that** the arresting of the blocking member (18) is only released for movement into the first position when the motor vehicle is stationary.

2. Locking system according to claim 1, **characterised in that** the movement of the blocking member (18) from the second into the first position is released when there is a signal to indicate that the motor vehicle is stationary, the signal being the absent tacho signal.

3. Locking system according to claim 1 or 2, **characterised in that** the movement of the blocking member (18) from the second into the first position when the blocking member (18) has been released is triggered by removing, or after removal of, the key (2) associated with the locking system (1) from the lock.

4. Locking system according to claim 1, 2 or 3, **characterised in that** the blocking member (18) can be moved mechanically between the first and the second position by being coupled to the lock, or electromagnetically or electromotively by a signal provided by the lock.

5. Locking system according to one of claims 1 to 4, **characterised in that** the blocking member (18) is mechanically coupled to the rotor (22) in such a way that the blocking member (18) can be moved from the first into the second position by rotating the rotor (22), **in that** coupling is by means of a slide (23) loaded by a spring (24), **in that** the slide (23) engages in the blocking member (18) by means of a pin (25), and **in that** a screw thread (26) on the rotor (22) acts in the manner of a worm on an edge face (27) of the slide (23) to move the slide (23) upon rotation of the rotor (22) linearly against the force of the spring (24) in such a way that the blocking member (18) is moved in the direction of the second position.

6. Locking system according to one of claims 1 to 5, **characterised in that** a cam element (28) on the slide (23) and loaded by means of a spring (29) is arranged on the side remote from the blocking member (18), **in that** the cam element (28) comes to rest on a holding part (31) of a one-armed lever (30) rotatably mounted on the rotor (22) when the slide (23) together with the blocking member (18) is moved from the first position in the direction of the second position, the spring (29) being tensioned, and **in that** when the second position is approximately reached the cam element (28) is released by the holding part (31), so a mount (32) on the cam element (28) engages with the holding part (31) from behind, whereby the cam element (28) is held securely and the slide (23) together with the blocking member (18) is arrested mechanically in the second position.

7. Locking system according to one of claims 1 to 6, **characterised in that** a movable ram (33) loaded by a spring (45) is arranged in the rotor (22), **in that** in the second position the ram (33) acts with one end on the lever arm of the lever (30), whereby the lever (30) is secured in a position in which the cam element (28) is in turn secured by the holding part (31), and **in that** a pivot element (34) for securing the ram (33) acts on the other end of the ram (33).

8. Locking system according to one of claims 1 to 7, **characterised in that** a key (2) located in the lock acts on the lever (30) via a nose (43), whereby the lever (30) is also secured in the position in which the cam element (28) is in turn secured by the holding part (31).

9. Locking system according to one of claims 1 to 8, **characterised in that** the pivot element (34) can be pivoted by the electromagnetic catch (19), **in that** the electromagnetic pivoting of the pivot element (34) is triggered when the motor vehicle is stationary and releases the ram (33) in the process, **in that** the cam element (28) presses the holding part (31) together with the lever (30) against the force of the spring (45) on the ram (33) out of the movement path of the cam element (28) after the ram (33) has been released and the key (2) removed from the lock, owing to the force of the spring (24) in the slide (23) and optionally the force of the spring (44) in the blocking element (18), so the slide (23) is released and returns to the first position owing to the force of the spring (24), **in that** as a result the pin (25) is again released and therefore arresting of the blocking member (18) is cancelled, and **in that** finally the blocking member (18) moves into the first position, with a corresponding position of the steering wheel column (17), owing to the acting force of the spring (44).

10. Locking system according to one of claims 1 to 9, **characterised in that** the ignition lock (3) has a housing (20) arranged on the steering wheel column (17) of the motor vehicle, **in that** the locking device (16) is arranged in the housing (20), and **in that** switching elements (35) of the mechanical switch type for supplying electrical energy to operating units (13) of the motor vehicle, such as starter, ignition, engine control and the like, are located in the housing (20).

11. Locking system according to one of claims 1 to 10, **characterised in that** the mechanical switch is arranged transversely to the rotor (22) of the ignition lock (3), **in that** the switching elements (35) of the mechanical switch can be actuated by means of a cam control (36) on a rotatable mechanical switch shaft (37), the switching elements (35) being actuated as a function of the position of the rotor (22) in the ignition lock (3), and **in that** the movement of the rotor (22) is transmitted to the mechanical switch shaft (37) by a pinion (38) attached to the rotor (22) and a gearing (39) on the mechanical switch shaft (37) which cooperate, for example, in the manner of a conical toothed wheel.

12. Locking system according to one of claims 1 to 11, **characterised in that** the movement of the rotor (22) can be blocked by a pivotal blocking lever (40) of the electromagnetic catch (19).

13. Locking system according to one of claims 1 to 12, **characterised in that** the rotor (22) has a mount (11) for the electronic key (2), and **in that** there is a code transmission between the electronic key (2) and the ignition lock (3) in the key (2) located in the mount (11), the electromagnetic catch (19) releasing the rotor (22) by pivoting the blocking lever (40) for manual rotation by the key (2) when the code is successfully transmitted.

14. Locking system according to one of claims 1 to 13, **characterised in that** the blocking lever (40) is articulated to the pivot element (34) for the locking device (16).

## Revendications

1. Système de fermeture pour un véhicule automobile, comportant une serrure, comme une serrure de contact électronique (3), qui présente un rotor (22) pouvant tourner au moyen d'une clef (2), en particulier une clef électronique, et un dispositif de verrouillage (16) pour la colonne de direction (17) du véhicule automobile, pour le levier de changement de vitesses du véhicule automobile, ou analogue, le dispositif de verrouillage (16) présentant un organe d'arrêt (18) déplaçable entre deux positions, dont le déplacement peut être déclenché par la serrure, l'organe d'arrêt (18), dans la première position, pouvant être amené en engagement bloquant avec la colonne de direction (17), -le levier de changement de vitesses ou analogue et, dans la seconde position, se trouvant hors d'engagement avec la colonne de direction (17), le levier de changement de vitesses ou analogue, et l'organe d'arrêt (18) pouvant être bloqué dans la seconde position au moyen d'un bloqueur électromagnétique (19), et le mouvement du rotor (22) pouvant être bloqué dans la position de sortie au moyen du bloqueur électromagnétique (19), **caractérisé en ce que**, pour bloquer le mouvement du rotor (22), un levier d'arrêt (40) du bloqueur électromagnétique (19) coopère directement avec le rotor (22) et **en ce que** l'arrêt libère ensuite l'organe d'arrêt (18) pour un mouvement dans la première position, seulement lorsque le véhicule se trouve à l'arrêt.

2. Système de fermeture selon la revendication 1, **caractérisé en ce que** le déplacement de l'organe d'arrêt (18) de la seconde à la première position est libéré lors de la présence d'un signal pour l'arrêt du véhicule automobile, le signal consistant en le signal tachymétrique manquant.

3. Système de fermeture selon la revendication 1 ou 2, **caractérisé en ce que** le déplacement de l'organe d'arrêt (18) de la seconde à la première position est déclenché, lorsque l'organe d'arrêt (18) est libéré, en retirant ou après avoir retiré la clef (2), correspondant au système de fermeture (1), de la serrure.

4. Système de fermeture selon la revendication 1, 2 ou 3, **caractérisé en ce que** l'organe d'arrêt (18) peut être déplacé entre la première et la seconde position mécaniquement par couplage avec la serrure ou de façon électromagnétique ou électromotorisée par un signal fourni par la serrure.

5. Système de fermeture selon une des revendications 1 à 4, **caractérisé en ce que** l'organe d'arrêt (18) est couplé mécaniquement au rotor (22) de sorte que l'organe d'arrêt (18) peut être déplacé de la première dans la seconde position par rotation du rotor (22), **en ce que** le couplage est effectué par l'intermédiaire d'une coulisse (23) chargée par un ressort (24), **en ce que** la coulisse (23) s'engage dans l'organe d'arrêt (18) au moyen d'un axe (25), et **en ce qu'**un pas de vis (26) sur le rotor (22) s'engage, à la manière d'une vis sans fin, sur une surface de bord (27) de la coulisse (23) pour déplacer la coulisse (23) lors de la rotation du rotor (22) de façon linéaire à l'encontre de la force du ressort (24), de sorte que l'organe d'arrêt (18) est déplacé en direction de la seconde position.

6. Système de fermeture selon une des revendications 1 à 5, **caractérisé en ce qu'**un élément à ergot (28) chargé au moyen d'un ressort (29) est agencé sur la coulisse (23) sur la face opposée à l'organe d'arrêt (18), **en ce que** l'élément à ergot (28), lors du déplacement de la coulisse (23) en même temps que l'organe d'arrêt (18) de la première position en direction de la seconde position, vient en appui contre une pièce de retenue (31) d'un levier (30) à un bras, monté de façon rotative sur le rotor (22), le ressort (29) étant contraint, et **en ce que**, pratiquement au moment d'atteindre la seconde position, l'élément à ergot (28) est libéré de la pièce de retenue (31), de sorte qu'une partie de réception (32) sur l'élément à ergot (28) vient en engagement arrière avec la pièce -de retenue (31), grâce à quoi l'élément à ergot (28) est immobilisé et la coulisse (23), en même temps que l'organe d'arrêt (18), est bloquée mécaniquement dans la seconde position.

7. Système de fermeture selon une des revendications 1 à 6, **caractérisé en ce que**, dans le rotor (22), il est agencé un coulisseau mobile (33) chargé par un ressort (45), **en ce que**, dans la seconde position, le coulisseau (33) agit par une extrémité sur le bras du levier (30), grâce à quoi le levier (30) est immobilisé dans une position dans laquelle, à son tour, l'élément à ergot (28) est immobilisé par la pièce de retenue (31), et **en ce que**, à l'autre extrémité du coulisseau (33), un élément pivotant (34) agit pour immobiliser le coulisseau (33).

8. Système de fermeture selon une des revendications 1 à 7, **caractérisé en ce qu'**une clef (2) se trouvant dans la serrure agit par une pièce (43) sur le levier (30), grâce à quoi le levier (30) est de même immobilisé dans la position dans laquelle, à son tour, l'élément à ergot (28) est immobilisé par la pièce de retenue (31).

9. Système de fermeture selon une des revendications 1 à 8, **caractérisé en ce que** l'élément pivotant (34) peut pivoter au moyen du bloqueur électromagnétique (19), **en ce que** le pivotement électromagnétique de l'élément pivotant (34) est déclenché à l'arrêt du véhicule automobile et, de plus, libère le coulisseau (33), **en ce que** l'élément à ergot (28), après libération du coulisseau (33) et retrait de la clef (2) de la serrure, grâce à la force du ressort (24) dans la coulisse (23) et, le cas échéant, à la force du ressort (44) dans l'organe d'arrêt (18), presse la pièce de retenue (31) en même temps que le levier (30) à l'encontre de la force du ressort (45) contre le coulisseau (33) hors de la voie de déplacement de l'élément à ergot (28), grâce à quoi la coulisse (23) est libérée et, grâce à la force du ressort (24), est ramenée dans la première position, **en ce que**, ainsi, à son tour l'axe (25) est libéré et, de ce fait, le blocage de l'organe d'arrêt (18) est neutralisé, et **en ce que**, enfin, l'organe d'arrêt (18), pour une position correspondante de la colonne de direction (17), se déplace dans la première position grâce à la force agissante du ressort (44).

10. Système de fermeture selon une des revendications 1 à 9, **caractérisé en ce que** la serrure de- contact (3) présente un carter (20) agencé sur la colonne de direction (17) du véhicule automobile, **en ce que** le dispositif de verrouillage (16) est agencé dans le carter (20), et **en ce que**, dans le carter (20), se trouvent des éléments de commutation (35) du type commutateur en charge pour l'alimentation en énergie électrique d'appareils de service (13) du véhicule automobile, comme le démarreur, l'allumage, la commande du moteur, et analogue.

11. Système de fermeture selon une des revendications 1 à 10, **caractérisé en ce que** le commutateur en charge est agencé transversalement au rotor (22) de la serrure de contact (3), **en ce que** les éléments de commutation (35) du commutateur en charge peuvent être actionnés au moyen d'une commande à ergot (36) sur un arbre rotatif (37) du commutateur en charge, l'actionnement des éléments de commutation (35) étant effectué de façon dépendant de la position du rotor (22) dans la serrure de contact (3), et en- ce que le déplacement du rotor (22) est transmis, par l'intermédiaire d'un pignon (38) agencé sur le rotor (22) et d'une denture (39) sur l'arbre (37) du commutateur en charge, qui, par exemple, coopèrent à la manière d'une roue dentée conique, sur l'arbre (37) du commutateur en charge.

12. Système de fermeture selon une des revendications 1 à 11, **caractérisé en ce que** le déplacement du rotor (22) peut être bloqué au moyen d'un levier d'arrêt pivotant (40) du bloqueur électromagnétique (19).

13. Système de fermeture selon une des revendications 1 à 12, **caractérisé en ce que** le rotor (22) présente une partie de réception (11) pour la clef électronique (2), et **en ce qu'**un transfert de code entre la clef électronique (2) et la serrure de contact (3) a lieu lorsque la clef (2) se trouve dans la partie de réception (11), le bloqueur électromagnétique (19), lors du transfert de code couronné de succès, libérant, par pivotement du levier d'arrêt (40), le rotor (22) pour la rotation manuelle par la clef (2).

14. Système de fermeture selon une des revendications 1 à 13, **caractérisé en ce que** le levier d'arrêt (40) est articulé à l'élément pivotant (34) pour le dispositif de verrouillage (16).
